Europäisches Patentamt

European Patent Office

Office européen des brevets

(11) Publication number: **0 320 007 B1**

# EUROPEAN PATENT SPECIFICATION

(45) Date of publication of patent specification: **08.09.93**   (51) Int. Cl.5: **B60K 28/16**

(21) Application number: **88120641.1**

(22) Date of filing: **09.12.88**

(54) **Driving wheel slip control device.**

(30) Priority: **10.12.87 JP 314589/87**

(43) Date of publication of application:
**14.06.89 Bulletin 89/24**

(45) Publication of the grant of the patent:
**08.09.93 Bulletin 93/36**

(84) Designated Contracting States:
**DE FR GB SE**

(56) References cited:
**EP-A- 0 163 941**
**EP-A- 0 240 174**
**US-A- 3 680 655**

**PATENT ABSTRACTS OF JAPAN vol. 10, no. 146 (M-482)(2203) 28 May 1986, & JP-A-61 1543 (TOYOTA) 07 January 1986,**

(73) Proprietor: **HONDA GIKEN KOGYO KABUSHIKI KAISHA**
**1-1, 2-chome Minami-Aoyama**
**Minato-ku Tokyo(JP)**

(72) Inventor: **Shiraishi, Shuji**
**c/o K.K. Honda Gijyutsu Kenkyusho 4-1,**
**1-chome**
**Chuo Wako-shi Saitama(JP)**

Inventor: **Kiryu, Hironobu**
**c/o K.K. Honda Gijyutsu Kenkyusho 4-1,**
**1-chome**
**Chuo Wako-shi Saitama(JP)**
Inventor: **Nishihara, Takashi**
**c/o K.K. Honda Gijyutsu Kenkyusho 4-1,**
**1-chome**
**Chuo Wako-shi Saitama(JP)**
Inventor: **Omomo, Naoki**
**c/o K.K. Honda Gijyutsu Kenkyusho 4-1,**
**1-chome**
**Chuo Wako-shi Saitama(JP)**
Inventor: **Sato, Makato**
**c/o K.K. Honda Gijyutsu Kenkyusho 4-1,**
**1-chome**
**Chuo Wako-shi Saitama(JP)**

(74) Representative: **Prechtel, Jörg, Dipl.-Phys. Dr. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**D-81635 München (DE)**

## Description

This invention relates to a driving wheel slip control device for a vehicle and more particularly to a control device which can prevent properly an engine stall.

There has been a conventionally known driving wheel slip control device in which, in order to prevent an excessive slip of a driving wheel, the state of slip is detected in response to the velocity of a driving wheel and the like, and when a slip has occurred, for example, fuel supply to an engine is stopped to suspend the combustion of an engine. Further, for example, Japanese Patent Laid-Open Publication 47-1512 discloses this kind of slip control device in which the suspension of combustion of an engine is prohibited when an engine is rotated at a low speed or when a vehicle runs at a low speed thereby to prevent an engine stall.

However, in the conventional slip control devices, a region in which the combustion of the engine is prohibited from stopping (this region is simply called "a prohibition region" heinafter) is determined on the basis of only either number of revolutions of an engine or velocity of a vehicle, and, therefore, there is a defect that a suspension system resonates to decrease a driving ability and a slip control cannot be carried out through a wide region of number of revolutions of an engine while preventing an engine stall.

That is, in case that the prohibition region is determined on the basis of only number of revolutions of an engine, and that a predetermined number of revolutions of an engine as a threshhold value is determined at a minimum value so as to prevent the engine stall, the cycle of combustion and stop of combustion of an engine coincides with a specific frequency of the suspension system at a time of start of a vehicle or at a time of low velocity of a vehicle to generate a resonance of the suspension system thereby to decrease a driving ability. Moreover, in case that the predetermined number of revolutions of an engine is determined at a higher value in order to prevent such a resonance, the prohibition region is widened to a region of middle velocity of a vehicle in a high gear position of a transmission gear to reduce a region of slip control to be primarily performed, corresponding to expansion of the prohibition region.

In contrast, in case that the prohibition region is determined on the basis of only velocity of a vehicle, the region of a low revolution of an engine comes off from the prohibition region in a high gear position of a transmission gear to make impossible the prevention of an engine stall.

In order to solve the above problems of prior art, the object of this invention is to provide a driving wheel slip control device in which a driving ability can be improved by the prevention of resonance in a suspension system, and in which not only the prevention of an engine stall but also the expansion of a slip control region can be realized.

According to this invention, there is provided a driving wheel slip control device according to independent claim 1.

The characteristic features and effects of the present invention will become manifest upon study of the following detailed description when taken together with the drawings.

In the accompanying drawings;

FIG.1 is a constructional view of a driving wheel slip control device according to this invention;

FIG.2 is a constructional view of a fuel supply control device for controlling an output of an engine:

FIG.3 is a flow chart of a subroutine for determining the state of an excessive slip of driving wheels;

FIG.4 is a flow chart of a subroutine for controlling fuel supply to an engine and suspension of fuel supply; and

FIG.5 is a view showing a prohibition region in which fuel supply to the engine is suspended at a time of an occurrence of an excessive slip.

In the following, one embodiment of this invention will now be explained with reference to drawings.

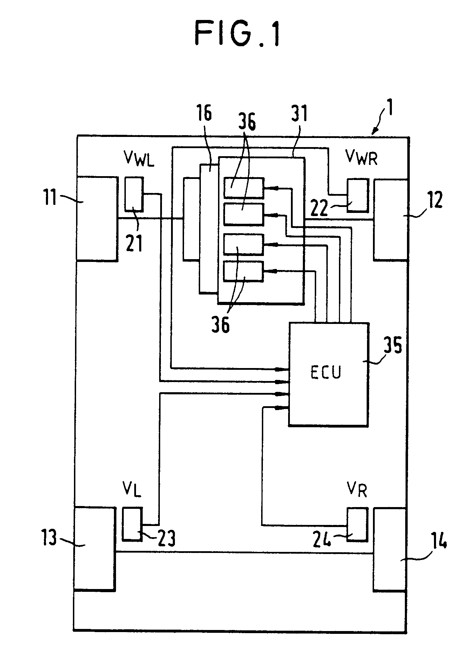

FIG.1 shows a vehicle 1 provided with a driving wheel slip control device. The vehicle 1 is, for example, a front wheel drive type vehicle. Two front wheels 11, 12 function as two driving wheels driven by an internal combustion engine,respectively, through a transmission gear while two rear wheels 13, 14 function as two driven wheels, respectively. As is apparent from the following explanations, this invention can be adapted for a rear wheel drive type vehicle in the same manner. On the driving wheels 11, 12 and the driven wheels 13, 14 are provided two driving wheel velocity sensors 21, 22 (each called a "$V_W$ sensor" hereinafter) and two driven wheel velocity (velocity of a vehicle) sensors 23, 24 (each called a "V sensor" hereinafter), respectively. Two left and right driving velocities $V_{WL}$, $V_{WR}$ are detected, and left and right driven wheel velocities $V_L$, $V_R$ are detected by the V sensors 23, 24. These detected signals are put into an electric control unit 35 (called an "ECU" hereinafter).

The ECU 35 forms a slip detecting means, an engine output reducing means, a prohibition region determining means and a prohibition means.

The ECU 35 functions to select either the left or right driving wheel velocity $V_{WL}$ or $V_{WR}$ as a driving wheel velocity $V_W$, and to select either the driven wheel velocity $V_L$ or $V_R$ on the same side as the selected driving wheel velocity $V_{WL}$ or $V_{WR}$ as a vehicle velocity V.

The ECU 35 controls an output of an engine 31 through a fuel supply control device to adjust each torque of the driving wheels 11, 12 thereby to control a state of slip of the driving wheels 11, 12.

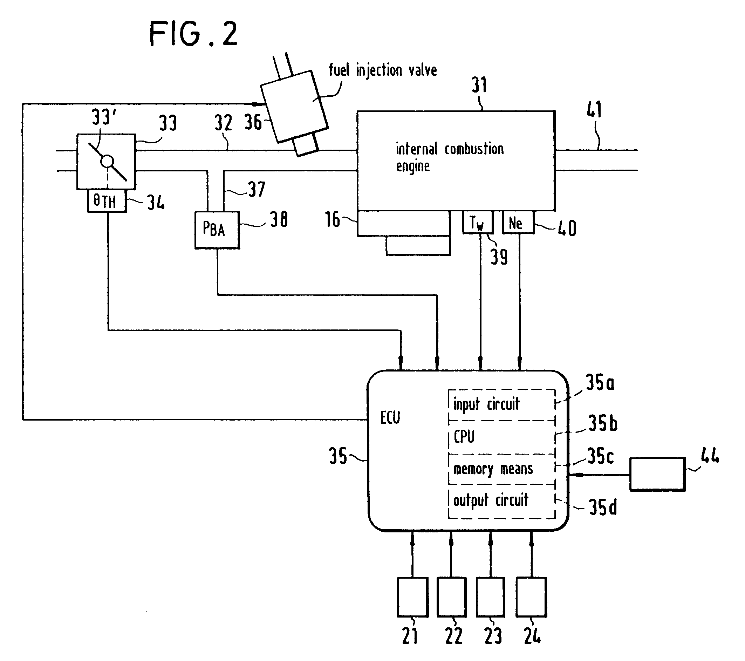

FIG.2 shows a general construction of the fuel supply control device. The internal combustion engine 31 is provided with, for example, six cylinders, and an intake tube 32 is connected on the upstream side of the engine 31 while an exhaust tube 41 is connected on the downstream side thereof, respectively. At an intermediate portion of the intake tube 32 is provided a throttle body 33 in which a throttle valve 33′ is accommodated. The throttle valve 33′ has a sensor 34 for detecting the opening degree of the valve ($\theta_{TH}$) which is converted into an electric signal to be sent to the ECU 35.

With respect to each cylinder, a fuel injection valve 36 is provided at an intermediate portion of the intake tube 32 between the engine 31 and the throttle body 33 and at a slightly upstream position of an intake valve (not shown) of each cylinder. The fuel injection valve 36 is connected to a fuel pump which is not shown in the drawing and is electrically connected to the ECU 35 so that a period of time for which the valve 36 is opened is controlled.

In contrast, at a downstream position of the throttle body 33 of the intake tube 32 is provided an intake tube absolute pressure ($P_{BA}$) sensor 38 through a tube 37, and an absolute pressure signal converted by the absolute pressure sensor 38 into an electric signal is sent to the ECU 35.

The main body of the engine 31 has an engine cooling water temperature sensor 39 (called a "$T_W$ sensor" hereinafter). The $T_W$ sensor 39 is a thermistor or the like which is inserted into the peripheral wall of an engine cylinder to send a detected cooling water temperature signal to the ECU 35. An engine revolutional number sensor 40 (called a "Ne sensor" hereinafter is fixed to a peripheral portion of a cam shaft (not shown) of the engine or of a crank-shaft. The Ne sensor 40 outputs a crank angle position pulse signals (called a "TDC signal pulse" hereinafter) at predetermined positions at each time when the crank-shaft is rotated through an angle of 120 degrees, that is, at predetermined crank angle positions before each piston reaches the top dead center (TDC) at a time when an intake step of each cylinder starts, and the TDC pulse signal is sent to the ECU 35.

Moreover, the $V_W$ sensors 21, 22, the V sensors 23, 24 and other parameter sensor 44 are connected to the ECU 35 to which each detected signal is sent.

The ECU 35 shapes input signal waveforms inputted from each sensor to modify a voltage level to a predetermined level and comprises an input circuit 35a functioning to convert an analog signal value into a digital signal value, a central processing unit 35b (called a "CPU" hereinafter), a memory means 35c for memorizing various kind of operational programs and calculated results or the like which are carried out by the CPU 35b, respectively, and an output circuit 35d for sending a driving signal to the fuel injection valve 36.

The CPU 35b calculates a fuel injection time of the fuel injection valve 36 in response to engine parameter signals from the various sensors according to the following expression (1) at each time when the TDC pulse signal is put into the CPU 35b.

$$Tout = T_i \times K_1 + K_2 \qquad (1)$$

wherein $T_i$ represents a basic period of time for fuel injection. For example, the basic period of time $T_i$ is read from a $T_i$ map memorized in the memory means 35c in accordance with the intake tube absolute pressure $P_{BA}$ and the engine revolutional number Ne. Further, $K_1$ and $K_2$ represent a correction coefficient and a correction variable, respectively, which are determined at respective predetermined values in such a manner that various characteristics such as a characteristic of fuel consumption and a characteristic of acceleration in accordance with the driving state of the engine become optimum.

The CPU 35b couputs a driving signal for opening tbe fuel injection valve 36 on the basis of the period of time Tout for fuel injection calculated in the above-mentioned manner to the fuel injection valve 36 through the output circuit 5d.

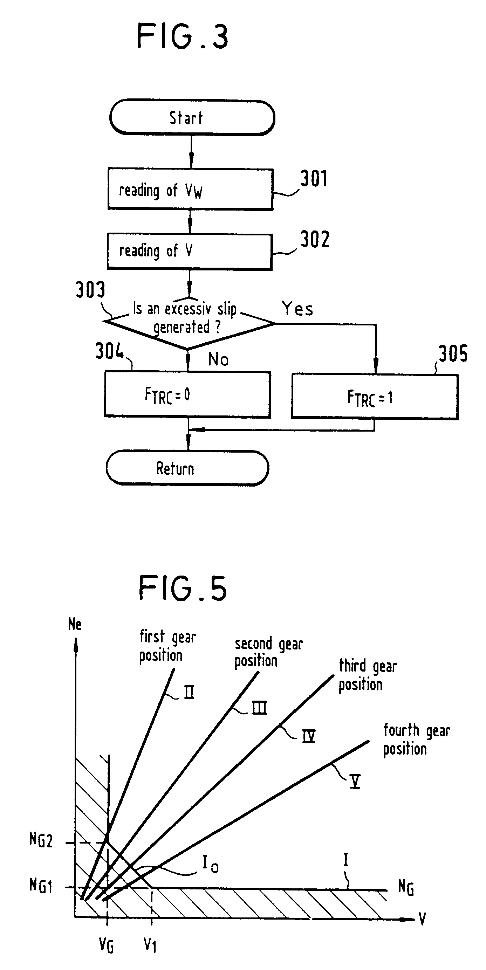

FIG.3 shows a flow chart of a subroutine for judging whether or not an excessive or abnormal slip has occurred. This program is performed at a predetermined interval. First, the driving wheel velocity $V_W$ is read from the detected signals of the $V_W$ sensors 21, 22 (step 301), and then the vehicle speed V is read from the detected signals of the V sensors 23, 24 (step 302). Thereafter, it is judged whether or not an excessive slip has been generated at the driving wheels 11, 12 (step 303). This judgement can be performed in various manners that, for example, the driving wheel velocity $V_W$ read in the step 302 is compared with the reference velocity $V_R$ calculated on the basis of a predetermined expression in accordance with the vehicle velocity V read in tbe step 302, and that a slip ratio $\lambda$ calculated on the basis of the driving wheel velocity $V_W$ and the vehicle velocity V is compared with a reference slip ratio $\lambda_R$( e.g., 15%). When the answer of the step 303 is negative "No", that is, when an excessive slip has not been generated at the driving wheels 11, 12, flag $F_{TRC}$ is set at a value "0" (step 304). When the answer of the step 303 is affirmative "Yes", that is, when an excessive slip has been generated the flag $F_{TRC}$ is set at a value "1" to terminate the program.

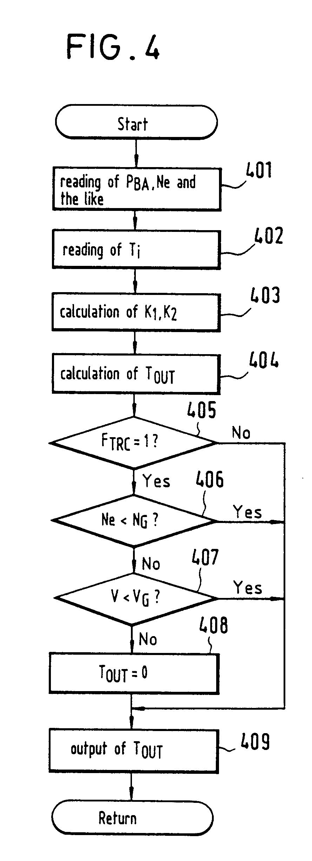

FIG. 4 shows a flow chart of a subroutine for controlling fuel supply and suspension of fuel supply. This program is performed synchronously with the TDC pulse signal at each time when the TDC pulse signal is outputted. First, engine parameter signals such as the intake tube absolute pressure $P_{BA}$, the engine revolutional number Ne and the like inputted from the various sensors are read through a step 401. Next, the basic fuel injection time $T_i$ of the fuel injection valve 36 is read in response to those engine parameter signals in the above manner (step 402) and the correction coefficient $K_1$ and the correction variable $K_2$ are calculated (step 403). Thereafter, fuel injection time Tout is calculated on the basis of the calculated $T_i$ $K_1$ and $K_2$ values in accordance with the above expression (step 404).

Next, it is determined whether or not flag $F_{TRC}$ is a value "1" (step 405). When the answer is negative (No). that is, when the flag $F_{TRC}$ is "0", and, accordingly, when an excessive slip has not been generated at the driving wheels 11, 12, a step 409 starts to output a driving signal on the basis of the fuel injection time Tout calculated through the step 404 to the fuel injection valve 36. During the time Tout, fuel is supplied from the fuel injection valve 36 to the engine 31 to terminate this program.

When the answer of the step 40 is affirmative (Yes), that is, when the flag $F_{TRC}$ is "1", and, accordingly, when an excessive slip has been generated at the driving wheels 11, 12, it is determined in next steps 406, 407 whether or not the engine revolutional number Ne and the vehicle velocity V exist in a region in which a fuel supply to the engine 31 is to be stopped (this is called a "fuel-cut" hereinafter), respectively, in order to prevent reliably an engine stall. FIG.5 shows this region. In FIG.5, four lines II to V show relationships between the engine revolutional number Ne and the vehicle speed V when a slip has not been generated in case that the transmission gear 16 takes four first to fourth gear positions as a parameter, respectively.

First, in a step 406, it is determined whether or not the engine revolutional number Ne is smaller than a predetermined revolutional number $N_G$. The predetermined revolutional number $N_G$ is determined on the basis of a solid line I in FIG. 5 in accordance with a vehicle velocity at that time. Namely, a reference velocity $V_1$ (e.g., 30km/h) and a predetermined velocity $V_G$ (e.g., 4km/h) smaller than the reference velocity $V_1$ are determined with respect to the vehicle velocity V. The predetermined revolutional number $N_G$ is determined at a first value $N_{G1}$ (e.g., 1200rpm) when the vehicle velocity V is larger than the reference velocity $V_1$ and at a second value (e.g., 2000rpm) larger than the first value $N_{G1}$ when the vehicle velocity V is smaller than the predetermined velocity $V_G$, that is, when the vehicle 1 runs in a low vehicle velocity region, respectively. Further, the predetermined revolutional number $N_G$ is determined by an interpolating calculating line $I_0$ when the vehicle velocity V is between the reference velocity $V_1$ and the predetermined velocity $V_G$. In this manner, the reason why the predetermined revolutional number $N_G$ is determined according to the vehicle velocity without referring to the driving wheel velocity $V_W$ is that an occurrence of an engine stall due to the fuel-out remarkably depends on kinetic energy of a vehicle, and the amount of kinetic energy is reflected by the level of the vehicle velocity V more correctly than other elements.

When the answer of the step 406 is negative "No", that is, when the relationship between Ne and $N_G$ is $Ne \geq N_G$ it is determined whether or not the vehicle speed V is smaller than the predetermined vehicle velocity $V_G$ (step 407). When the answer is negative "No", that is, when the relationship between V and $V_G$ is $V \geq V_G$, the step 409 is performed to terminate this program after the fuel injection time Tout is determined at a value "0" again (step 408). Namely, in case that an excessive slip has been generated at the driving wheels 11, 12, that the relationship between Ne and $N_G$ is $Ne \geq N_G$, and that the relationship between V and $V_G$ is $V \geq V_G$ except a region indicated by oblique lines), the fuel-cut is carried out to reduce the output of the engine, so that an excessive slip of the driving wheels can be prevented.

When the answer of the step 406 or 407 is affirmative "Yes", the step 409 is performed to terminate this program. That is, even if an excessive slip has been generated at the driving wheels 11, 12, and ,however, if the relationship betwen Ne and $N_G$ is Ne < $N_G$ in the case of V > $V_1$, if the relationship between V and $V_G$ is V < $V_G$, and if V and Ne are inside of the interpolating line $I_0$ in the case of $V_G$ < V < $V_1$ (a region indicated by oblique lines), the fuel-cut is prohibited to supply fuel to the engine in accordance with the fuel injection ime Tout calculated on the basis of the state of driving of the engine 31 in the step 404.

Since a fuel-cut region and a fuel-cut prohibition region at a time when an excessive slip has been generated at the driving wheels 11, 12 are determined in the above manner, respectively, when the vehicle runs in a low vehicle velocity condition in which an engine stall is apt to occur, that is, the relationship between V and $V_G$ is V < VG, the fuel-cut operation is prohibited, so that the engine stall can be effectively prevented at that time. Further, when the vehicle 1 runs in a low vehicle velocity condition, the predetermined revolutional number $N_G$ is determined at a large value in the above manner, and accordingly, the resonance phenomenon of the suspension system can be prevented. In addition, the prohibiting operation of the fuel-cut in case that the transmission gear takes a high gear shift position such as a third or fourth gear shift position, etc., can be performed on a larger engine revolutional number side in comparison with a fuel-cut prohibition region determined according to only the vehicle velocity V (see FIG.5), and accordingly, an occurrence of an engine stall can be reliably prevented.

Further, the possibility of the ocurrence of the engine stall due to the fuel-cut is rather low in intermediate and high velocity conditions of the vehicle 1, and accordingly, even if the predetermined revolutional number $N_G$ is determined at a smaller value as mentioned above, the engine stall is not caused by the determination. Such a determination expands a fuel-cut region, namely, a slip control region thereby to prevent an excessive slip in the region.

In the meantime, the output of the engine is decreased by suspension of fuel supply to the engine in this embodiment, and, however, the method of decreasing the output of the engine may be a method in which ingnition is stopped in addition to the above method.

As mentioned above, since a driving wheel slip control device according to this invention comprises a prohibition region determining means for determining a control prohibition region on the basis of velocity of a vehicle and number of revolutions of an engine, and a prohibition means for prohibiting an engine output reducing means from operating so as to reduce an output of the engine in response to the output from a slip detecting means for detecting the state of slip of the driving wheels, a resonance phenomenon in a suspension system can be prevented to improve a driving ability, and prevention of an engine stall as well as expansion of a slip control region can be realized.

## Claims

1. A driving wheel slip control device which comprises:
   a driving wheel velocity sensor (21,22) for detecting the velocity of a driving wheel (11,12) of a vehicle (1);
   a vehicle velocity sensor (23,24) for detecting the velocity of a vehicle (1);
   an engine revolutional number sensor (Ne) for detecting the number of revolutions of an engine (31);
   a slip detecting means (35) for detecting a state of slip of a driving wheel (11,12) in accordance with an output from said driving wheel velocity sensor (21,22);
an engine output reducing means (33,36) for reducing an output of the engine (31) in accordance with an output from said slip detecting means (35);
a prohibition region determining means (35) for determining a control prohibition region of at least one driving parameter; and
a prohibition means (35) for prohibiting said engine output reducing means (33,36) from operating in case said at least one driving parameter lies within said prohibition region, **characterized in**
that said prohibition region determining means (35) has a predetermined engine revolutional number determining means for determining a predetermined engine revolutional number ($N_G$) with respect to a velocity (V) of the vehicle (1), the predetermined engine revolutional number determining means determining said predetermined engine revolutional number ($N_G$) with respect to said velocity (V) of the vehicle (1) in such a manner that a reference vehicle velocity ($V_1$) and a predetermined vehicle velocity ($V_G$) lower than the reference vehicle velocity ($V_1$) are respectively determined, that a first value ($N_{G1}$) is determined in case that a velocity of the vehicle (1) is higher than the reference vehicle velocity ($V_1$), a second value ($N_{G2}$) higher than the first value ($N_{G1}$) is determined in case that a velocity of the vehicle (1) is lower than the predetermined vehicle velocity ($V_G$), and that a value is determined on the basis of an interpolating calculation line ($I_o$) in case that a velocity of the vehicle (1) is between the reference vehicle velocity ($V_1$) and the predetermined vehicle velocity ($V_G$), said prohibition region determining means (35) determining a control prohibition region on the basis of said predetermined engine revolutional numbers ($N_G$) determined by the predetermined engine revolutional number determining means.

2. A driving wheel slip control device according to claim 1, wherein said slip detecting means (35) detects a state of slip of the driving wheel (11,12) in such a manner comparing a velocity of the driving wheel (11,12) with a reference velocity ($V_R$) calculated on the basis of a predetermined expression in accordance with a velocity (V) of the vehicle (1).

3. A driving wheel slip control device according to claim 1, wherein said slip detecting means (35) detects a state of slip of the driving wheel (11,12) in such a manner comparing a slip ratio

($\lambda$) calculated on the basis of a velocity ($V_W$) of the driving wheel (11,12) and a velocity of the vehicle (1) with a reference slip ratio ($\lambda_R$).

4. A driving wheel slip control device according to claim 1, wherein said control prohibition region determined by said prohibition region determining means (35) comprises a region between a value 0 and the first value $N_{G1}$ with respect to engine revolutional number (Ne) in case that a velocity (V) of the vehicle (1) is higher than the reference vehicle value ($V_1$), a region between a value 0 and the predetermined vehicle velocity ($V_G$) with respect to a velocity (V) of the vehicle (1) in case that a velocity (V) of the vehicle (1) is lower than the predetermined vehicle velocity ($V_G$), and a region located inside an interpolating calculation line in case that a velocity of the vehicle (1) is between the reference vehicle value ($V_1$) and the predetermined vehicle velocity ($V_G$).

5. A driving wheel slip control device according to claim 1, wherein said prohibition means (35) performs a fuel-cut operation in a state wherein an excessive slip is generated to reduce an output of the engine (31) when a velocity (V) of the vehicle (1) and an engine revolutional number (Ne) are in a region except said control prohibition region, and prohibits said fuel-cut operation even if an excessive slip is generated when a velocity (V) of the vehicle (1) and an engine revolutional number (Ne) are in said control prohibition region.

6. A driving wheel slip control device according to claim 1, wherein said prohibition means (35) performs an ignition stop operation in a state wherein an excessive slip is generated to reduce an output of the engine (31) when a velocity (V) of the vehicle (1) and an engine revolutional number (Ne) are in a region except said control prohibition region, and prohibits said ignition stop operation even if an excessive slip is generated when a velocity (V) of the vehicle (1) and an engine revolutional number (Ne) are in said control prohibition region.

**Patentansprüche**

1. Antriebsradschlupf-Steuereinrichtung, umfassend:
   - einen Antriebsrad-Geschwindigkeitssensor (21, 22) zum Erfassen der Geschwindigkeit eines Antriebsrads (11, 12) eines Kraftfahrzeugs (1);
   - einen Kraftfahrzeuggeschwindigkeitssensor (23, 24) zum Erfassen der Geschwindigkeit eines Kraftfahrzeugs (1);
   - einen Motordrehzahlsensor (Ne) zum Erfassen der Drehzahl eines Motors (31);
   - ein Schlupferfassungsmittel (35) zum Erfassen eines Schlupfzustands eines Antriebsrads (11, 12) entsprechend einer Ausgabe des Antriebsrad-Geschwindigkeitssensors (21, 22);
   - ein Motorabgabeverringerungsmittel (33, 36) zum Verringern einer Leistungsabgabe des Motors (31) entsprechend einer Ausgabe von dem Schlupferfassungsmittel (35);
   - ein Verbotsbereichbestimmungsmittel (35) zum Bestimmen eines Steuerungsverbotsbereichs von wenigstens einem Fahrparameter;
   und
   - ein Verbotsmittel (35), welches dem Motorabgabeverringerungsmittel (33, 36) ein Arbeiten verbietet, wenn der wenigstens eine Fahrparameter innerhalb des Verbotsbereichs liegt, **dadurch gekennzeichnet,** daß das Verbotsbereichserfassungsmittel (35) ein Mittel zum Bestimmen einer vorbestimmten Motordrehzahl aufweist, um bezüglich einer Geschwindigkeit (V) des Kraftfahrzeugs (1) eine vorbestimmte Motordrehzahl ($N_G$) zu bestimmen, wobei das Mittel zum Bestimmen der vorbestimmten Motordrehzahl die vorbestimmte Motordrehzahl ($N_G$) bezüglich der Geschwindigkeit (V) des Kraftfahrzeugs (1) derart bestimmt, daß jeweils eine Referenzkraftfahrzeuggeschwindigkeit ($V_1$) und eine vorbestimmte Kraftfahrzeuggeschwindigkeit ($V_G$), kleiner als die Referenzkraftfahrzeuggeschwindigkeit ($V_1$), bestimmt werden, daß, wenn die Geschwindigkeit des Kraftfahrzeugs (1) höher ist als die Referenzkraftfahrzeuggeschwindigkeit ($V_1$), ein erster Wert ($N_{G1}$) bestimmt wird, wenn die Geschwindigkeit des Kraftfahrzeugs (1) niederer ist als die vorbestimmte Kraftfahrzeuggeschwindigkeit ($V_G$), ein zweiter Wert ($N_{G2}$), größer als der erste Wert ($N_{G1}$), bestimmt wird, und daß dann, wenn eine Geschwindigkeit des Kraftfahrzeugs (1) zwischen der Referenzkraftfahrzeuggeschwindigkeit ($V_1$) und der vorbestimmten Kraftfahrzeuggeschwindigkeit ($V_G$) liegt, ein Wert auf der Grundlage einer Interpolationsberechnungslinie ($l_0$) bestimmt wird, wobei das Verbotsbereichsbestimmungsmittel (35) einen Steuerungsverbotsbereich auf der Grundlage der durch die Mittel zum Bestimmen der vorbestimmten Motordrehzahl bestimmten Motordrehzahl ($N_G$) bestimmt.

2. Antriebsradschlupf-Steuereinrichtung nach Anspruch 1, worin das Schlupferfassungsmittel (35) einen Schlupfzustand des Antriebsrads (11, 12) derart bestimmt, daß es eine Geschwindigkeit des Antriebsrads (11, 12) mit einer Referenzgeschwindigkeit ($V_R$) vergleicht, welche auf der Grundlage eines vorbestimmten Ausdrucks entsprechend einer Geschwindigkeit (V) des Kraftfahrzeugs (1) berechnet wird.

3. Antriebsradschlupf-Steuereinrichtung nach Anspruch 1, worin das Schlupferfassungsmittel (35) einen Schlupfzustand des Antriebsrads (11, 12) derart erfaßt, daß es ein Schlupfverhältnis $\lambda$, welches auf der Grundlage einer Geschwindigkeit ($V_W$) des Antriebsrads (11, 12) und einer Geschwindigkeit des Kraftfahrzeugs (1) berechnet wird, mit einem Referenzschlupfverhältnis $\lambda_R$ vergleicht.

4. Antriebsradschlupf-Steuereinrichtung nach Anspruch 1, worin der durch das Verbotsbereichsbestimmungsmittel (35) bestimmte Steuerungsverbotsbereich einen Bereich zwischen einem Wert 0 und dem ersten Wert ($N_{G1}$) bezüglich der Motordrehzahl (Ne) umfaßt, wenn die Geschwindigkeit (V) des Kraftfahrzeugs (1) höher ist als die Referenzkraftfahrzeuggeschwindigkeit ($V_1$), einen Bereich zwischen einem Wert 0 und der vorbestimmten Kraftfahrzeuggeschwindigkeit ($V_G$) bezüglich einer Geschwindigkeit (V) des Kraftfahrzeugs (1), wenn eine Geschwindigkeit (V) des Kraftfahrzeugs (1) niederer ist als die vorbestimmte Kraftfahrzeuggeschwindigkeit ($V_G$), und einen innerhalb einer Interpolationsberechnungslinie gelegenen Bereich, wenn eine Geschwindigkeit des Kraftfahrzeugs (1) zwischen dem Referenzfahrzeugwert ($V_1$) und der vorbestimmten Kraftfahrzeuggeschwindigkeit ($V_G$) liegt.

5. Antriebsradschlupf-Steuereinrichtung nach Anspruch 1, worin das Verbotsmittel (35) einen Kraftstoff-Unterbrechungs-Vorgang in einem Zustand durchführt, in welchem ein übermäßiger Schlupf erzeugt ist, um eine Leistungsabgabe des Motors (31) zu verringern, wenn eine Geschwindigkeit (V) des Kraftfahrzeugs (1) und eine Motordrehzahl (Ne) in einem Bereich mit Ausnahme des Steuerungsverbotsbereichs liegen, und den Kraftstoff-Unterbrechungs-Vorgang verbietet, selbst wenn ein übermäßiger Schlupf erzeugt ist, wenn eine Geschwindigkeit (V) des Kraftfahrzeugs (1) und eine Motordrehzahl (Ne) in dem Steuerungsverbotsbereich liegen.

6. Antriebsradschlupf-Steuereinrichtung nach Anspruch 1, worin das Verbotsmittel (35) in einem Zustand, in welchem ein übermäßiger Schlupf erzeugt ist, eine Zündungs-Unterbrechung durchführt, um eine Leistungsabgabe des Motors (31) zu verringern, wenn eine Geschwindigkeit (V) des Kraftfahrzeugs (1) und eine Motordrehzahl (Ne) in einem Bereich mit Ausnahme des Steuerungsverbotsbereichs liegen, und den Zündungs-Unterbrechungs-Vorgang verbietet, selbst wenn ein übermäßiger Schlupf erzeugt ist, wenn eine Geschwindigkeit (V) des Kraftfahrzeugs (1) und eine Motordrehzahl (Ne) in dem Steuerungsverbotsbereich liegen.

## Revendications

1. Dispositif de contrôle de patinage d'une roue motrice, comprenant :
   un capteur de vitesse de roue motrice (21, 22) pour mesurer la vitesse d'une roue motrice (11, 12) d'un véhicule (1) ;
   un capteur de vitesse de véhicule (23, 24) pour mesurer la vitesse d'un véhicule (1) ;
   un capteur de nombre de tours de moteur (Ne) pour compter le nombre de tours d'un moteur (31) ;
   un moyen de détection de patinage (35) pour détecter un état de patinage d'une roue motrice (11, 12) en fonction d'un signal de sortie dudit capteur de vitesse de roue motrice (21, 22) ;
   un moyen de réduction de puissance de sortie de moteur (33, 36) pour réduire une sortie de puissancedu moteur (31) en fonction d'un signal de sortie dudit moyen de détection de patinage (35) ;
   un moyen de détermination de zone d'empêchement (35) pour déterminer une zone d'empêchement de commande d'au moins un paramètre d'entraînement ; et
   un moyen d'empêchement (35) pour empêcher ledit moyen de réduction de puissance de sortie de moteur (33, 36) de fonctionner dans le cas où au moins un paramètre d'entraînement se situe dans ladite zone d'empêchement,
   caractérisé en ce que :
   ledit moyen de détermination de zone d'empêchement (35) présente un moyen de détermination de nombre de tours de moteur prédéterminé pour déterminer un nombre de tours de moteur prédéterminé ($N_G$) par rapport à une vitesse (V) du véhicule (1), le moyen de détermination de nombre de tours prédéterminé déterminant ledit nombre de tours de moteur prédéterminé ($N_G$) par rapport à ladite vitesse (V) du véhicule (1), de manière qu'une vitesse de véhicule de référence ($V_1$) et une vitesse de véhicule prédéterminée ($V_G$), inférieure à la vitesse de véhicule de référence ($V_1$), soient respectivement déterminées, qu'une première valeur ($N_{G1}$) soit déterminée dans le cas où une vitesse du véhicule (1) est supérieure à la vitesse de véhicule de référence ($V_1$), une seconde valeur ($N_{G2}$) supérieure à la première valeur ($N_{G1}$) soit déterminée dans le cas où une vitesse du véhicule (1) est inférieure à la vitesse de véhicule prédéterminée ($V_G$) et qu'une valeur soit déterminée sur la base d'une ligne de calcul d'interpolation ($I_o$) dans le cas où une vitesse du véhicule (1) est comprise entre la vitesse de véhicule de référence ($V_1$) et la vitesse de véhicule prédéterminée ($V_G$), ledit moyen de détermination de zone d'empêchement (35) déterminant une zone d'empêchement de commande sur la base dudit nombre de tours de moteur prédéterminé ($N_G$) déterminé par le moyen de détermination de nombre de tours de moteur prédéterminé.

2. Dispositif de contrôle de patinage de roue motrice selon la revendication 1, dans lequel ledit moyen de détection de patinage (35) détecte un état de patinage de la roue motrice (11, 12), de manière à comparer une vitesse de la roue motrice (11, 12) avec une vitesse de référence ($V_R$) calculée sur la base d'une expression prédéterminée, en fonction d'une vitesse (V) du véhicule (1).

3. Dispositif de contrôle de patinage de roue motrice selon la revendication 1, dans lequel ledit moyen de détection de patinage (35) détecte un état de patinage de la roue motrice (11, 12), de manière à comparer un rapport de patinage ($\lambda$) calculé sur la base d'une vitesse ($V_W$) de la roue motrice (11, 12) et d'une vitesse du véhicule (1), avec un rapport de patinage de référence ($\lambda_R$).

4. Dispositif de contrôle de patinage de roue motrice selon la revendication 1, dans lequel ladite zone d'empêchement de commande déterminée par ledit moyen de détermination de zone d'empêchement (35) comprend une zone comprise entre une valeur 0 et la première valeur $N_{G1}$ par rapport au nombre de tours de moteur (Ne), dans le cas où une vitesse (V) du véhicule (1) est supérieure à la valeur de véhicule de référence ($V_1$), une zone comprise entre une valeur 0 et la vitesse de véhicule prédéterminée ($V_G$) par rapport à une vitesse (V) du véhicule (1), dans le cas où une vitesse (V) du véhicule (1) est inférieure à la vitesse de véhicule prédéterminée ($V_G$) et une zone située à l'intérieur d'une ligne de calcul d'interpolation, dans le cas où une vitesse du véhicule (1) est comprise entre la valeur de véhicule de référence ($V_1$) et la vitesse de véhicule prédéterminée ($V_G$).

5. Dispositif de contrôle de patinage de roue motrice selon la revendication 1, dans lequel ledit moyen d'empêchement (35) effectue une opération d'interruption d'alimentation en carburant dans un état dans lequel un patinage excessif est produit, pour réduire une puissance de sortie du moteur (31) lorsqu'une vitesse (V) du véhicule (1) et un nombre de tours de moteur (Ne) se situent dans une zone excluant ladite zone d'empêchement de commande, et empêche ladite opération d'interruption d'alimentation en carburant, même si un patinage excessif est produit, lorsqu'une vitesse (V) du véhicule (1) et un nombre de tours de moteur (Ne) se situent dans ladite zone d'empêchement de commande.

6. Dispositif de contrôle de patinage de roue motrice selon la revendication 1, dans lequel ledit moyen d'empêchement (35) effectue une opération d'arrêt d'allumage dans un état dans lequel un patinage excessif est produit, pour réduire une puissance de sortie du moteur (31) lorsqu'une vitesse (V) du véhicule (1) et un nombre de tours de moteur (Ne) se situent dans une zone excluant ladite zone d'empêchement de commande, et empêche ladite opération d'arrêt d'allumage, même si un patinage excessif est produit, lorsqu'une vitesse (V) du véhicule (1) et un nombre de tours de moteur (Ne) se situent dans ladite zone d'empêchement de commande.

# FIG.1

# FIG.2

fuel injection valve

internal combustion engine

θTH
PBA
Tw  Ne

ECU

input circuit — 35a
CPU — 35b
memory means — 35c
output circuit — 35d

35

21 22 23 24

# FIG.3

```
            ┌──────────────┐
            │    Start     │
            └──────┬───────┘
                   │
            ┌──────▼───────┐
            │ reading of Vw │──── 301
            └──────┬───────┘
                   │
            ┌──────▼───────┐
            │ reading of V  │──── 302
            └──────┬───────┘
     303           │
        ╲    ┌─────▼──────┐
         ╲   │Is an excessiv slip│   Yes
          ╲  │  generated ?      │────────────┐
           ╲ └─────┬──────┘                   │
    304          No│               305        │
   ┌──────────────▼──┐         ┌──────────────▼──┐
   │   F TRC = 0      │         │   F TRC = 1     │
   └──────────┬──────┘         └──────┬──────────┘
              │                       │
           ┌──▼───────────────────────┘
           │
     ┌─────▼──────┐
     │   Return   │
     └────────────┘
```

# FIG.5

first gear position Ⅱ
second gear position Ⅲ
third gear position Ⅳ
fourth gear position Ⅴ

$N_e$

$N_{G2}$

$N_{G1}$

$I_o$

$I$

$N_G$

$V_G$   $V_1$   $V$

# FIG. 4

```
                  ┌──────────────┐
                  │    Start     │
                  └──────┬───────┘
                         │
         ┌───────────────────────────┐   401
         │ reading of P_BA, Ne and   │
         │ the like                  │
         └───────────────┬───────────┘
                         │
         ┌───────────────────────────┐   402
         │ reading of T_i            │
         └───────────────┬───────────┘
                         │
         ┌───────────────────────────┐   403
         │ calculation of K_1, K_2   │
         └───────────────┬───────────┘
                         │
         ┌───────────────────────────┐   404
         │ calculation of T_OUT      │
         └───────────────┬───────────┘
                         │              405
                    ◇─────────────◇      No
                    │  F_TRC = 1 ? │──────────┐
                    ◇─────────────◇           │
                         │ Yes      406       │
                    ◇─────────────◇      Yes  │
                    │   Ne < N_G ? │──────────┤
                    ◇─────────────◇           │
                         │ No       407       │
                    ◇─────────────◇      Yes  │
                    │   V < V_G ?  │──────────┤
                    ◇─────────────◇           │
                         │ No       408       │
         ┌───────────────────────────┐        │
         │      T_OUT = 0            │         │
         └───────────────┬───────────┘        │
                         │◀────────────────────┘
         ┌───────────────────────────┐   409
         │ output of T_OUT           │
         └───────────────┬───────────┘
                         │
                  ┌──────────────┐
                  │   Return     │
                  └──────────────┘
```